Europäisches Patentamt

European Patent Office

Office européen des brevets

(19)

(11) Publication number : **0 493 071 A2**

## (12) EUROPEAN PATENT APPLICATION

(21) Application number : **91311950.9**

(22) Date of filing : **23.12.91**

(51) Int. Cl.⁵ : **G02F 1/13, H01R 9/09**

(30) Priority : **27.12.90 JP 407859/90**
**28.10.91 JP 281197/91**

(43) Date of publication of application :
**01.07.92 Bulletin 92/27**

(84) Designated Contracting States :
**DE FR GB**

(71) Applicant : **SEIKO EPSON CORPORATION**
**4-1, Nishishinjuku 2-chome**
**Shinjuku-ku Tokyo (JP)**

(72) Inventor : **Iguchi, Kazuo**
**c/o Seiko Epson Corporation, 3-5, Owa**
**3-chome**
**Suwa-shi, Nagano-ken (JP)**

(74) Representative : **Miller, Joseph et al**
**J. MILLER & CO. Lincoln House 296-302 High**
**Holborn**
**London WC1V 7JH (GB)**

(54) **Liquid crystal display device.**

(57) A liquid crystal display device comprising an insulating substrate (1) ; an electrode terminal (5) on a terminal-carrying surface (1a) of the substrate (1) ; and a connector pin (15) having an engagement portion (8) which has been introduced over an end portion (1b) of the substrate (a) and moved into a position in which it engages the electrode terminal (5) characterised in that the end portion (1b) is chamfered to reduce the risk of damage to the substrate (1) when the engagement portion (8) is so introduced.

FIG. 1.

EP 0 493 071 A2

The present invention relates to liquid crystal display devices such as those adapted to be mounted on a vehicle and utilized in fields of measuring instruments and electric appliances for private and domestic uses.

In a known liquid crystal display device in which a connector pin engages an electrode terminal disposed near an edge of a glass substrate, the latter is liable to become broken in the region engaged by the connector pin with the result that the connector pin is liable to be inserted into the electrode terminal.

The end portion of the glass substrate adjacent to where the connector pin engages is in a rough state after being broken. Hence, when the connector pin engages therewith, the conductive resistance between the electrode terminal and the connector pin increases due to surface exfoliation of a solder plating agent which is employed for surface processing of the connector pin, wear of the material of the connector pin, and a reduction in the pin clip force which arises from the engagement of the connector pin. The conduction reliability drops considerably due to these changes with the passage of time.

Accordingly, it is an object of the present invention to provide a liquid crystal display device in which there is a substantial improvement in the conduction reliability of the connection between the electrode terminal and the connector pin.

According to the present invention, there is provided a liquid crystal display device comprising an insulating substrate; an electrode terminal on a terminal-carrying surface of the substrate; and a connector pin having an engagement portion which has been introduced over an end portion of the substrate and moved into a position in which it engages the electrode terminal characterised in that the end portion is chamfered to reduce the risk of damage to the substrate when the engagement portion is so introduced.

Preferably, the electrode terminal extends to the said end portion so as also to be chamfered.

Preferably, the connector pin has a further portion which engages a further surface of the substrate which is opposite to the terminal-carrying surface.

Preferably, the said portion or portions of the connector pin are embedded in moulding material.

In one embodiment, the said end portion of the substrate is provided with at least one planar chamfere.

In this case it is preferable that the angle between the said planar chamfer and the terminal-carrying surface is in the range of 20° to 60°.

In another embodiment, the said end portion of the substrate is provided with at least one chamfer of arcuate form.

In this case it is preferable that the or each chamfer of arcuate form extends over substantially one third of the said end portion of the substrate.

The substrate is preferably a glass substrate.

The invention is illustrated, merely by way of example, in the accompanying drawings, in which:-

Figure 1 is a broken away sectional view illustrating one embodiment of this invention;

Figure 2 is an enlarged diagram of a chamfer portion of the structure shown in Figure 1;

Figure 3 is a graph showing the correlation between the glass substrate thickness and the amount of chamfer;

Figure 4 is a broken-away sectional view showing another embodiment of this invention; and

Figure 5 is a graph showing how the resistance value variation differs according to the chamfer used.

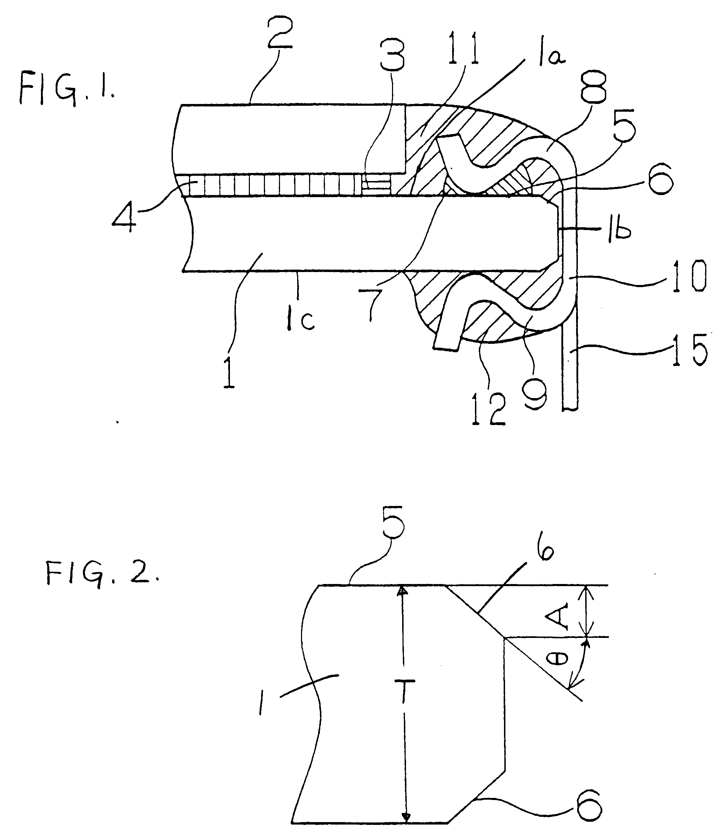

In Figure 1 there is shown a first embodiment of a liquid crystal display device in which liquid crystal material 4 used for a TN or STN type display is sandwiched in between glass or other insulating substrates 1, 2 which are held parallel by means of spacers 3 (only one shown).

A planar or filiform chamfer 6 is formed along at least one ridge line or edge of the glass substrate 1, the latter having a terminal-carrying surface 1a on which an electrode terminal 5 is provided adjacent to or right up to an end portion 1b of the glass substrate 1. The chamfer 6 is thus formed at the end portion 1b by using a diamond wheel or the like, and this chamfer may also extend over the electrode terminal 5. A similar chamfer 6 is provided on the opposite edge of the substrate 1. Next, a conductive resin 7 is printed or coated on the elecdtrode terminal 5.

Thereafter, a connector pin 15 consisting of an upper connector pin clip 8, a lower connector pin clip 9 and a connector pin clip rear member 10 is inserted by introducing the pin clip 8 over the end portion 1b and moving it into a position in which it engages the electrode terminal 5. This may be effected by pushing the connector pin 15 in by means of a cylinder or the like. An upper moulding agent 11 and a lower moulding agent 12 are applied to cover the portions 8, 9 of the connector pin 15. The moulding agents are irradiated with ultraviolet rays and thereby hardened by the use of a UV resin. The lower connector pin clip 9 engages a surface 1c of the substrate 1 which is opposite to the terminal- carrying surface 1a.

In the liquid crystal display device so produced the provision of the chamfered end portion 1b reduces the risk of damage to the substrate 1 when the upper connector pin clip 8 is introduced thereover and moved into engagement with the electrode terminal 5. In such a liquid crystal device the conductive resistance between the electrode terminal 5 and the upper connector pin clip 8 is stabilized, thereby substantially reducing disconnections caused by a rise in the conductive resistance. Hence, the conduction reliability is improved, and a considerable improvement in a manufacturing yield can also be seen.

Figure 2 is an enlarged view of the filiform chamfer 6 of Figure 1. Table 1 gives the results of tests concerning the correlation between the chamfer angle θ, i.e. the angle between the chamfer 6 and the terminal-carrying surface 1a, and reliability.

## TABLE 1

### Test Results concerning the Correlation between the Chamfer Angle θ and Reliability.

| Test No. | θ | Connector pin state | Deterioration rate | Remarks |
|---|---|---|---|---|
| 1 | 90° | exfoliation of solder plating | 10% | |
| 2 | 70° | same tendency as above | 0.02% | |
| 3 | 60° | no abnormality | 0% | |
| 4 | 45° | no abnormality | 0% | optimum conditions |
| 5 | 20° | no abnormality | 0% | |
| 6 | 10° | no abnormality | 0.1% | abnormality of pin clip force |

1. Thickness of glass substrate        1.1mm.
2. Vertical extent (A) of the chamfer 6. 0.3 mm
3. Connector pin thickness             0.3 mm
         "        "    material        PBSR-1/2H (phosphor bronze - 1/2 hardness)
         "        "    plating         copper plating 4 μm
                                              or less (base)
                                       solder plating 3-8 μm (surface
                                       (Pb: Sn = 9 :1)

If the angle θ is charged while the thickness of the glass substrate (1) is set at 1.1mm and A = 0.3mm, a quality stable state exists at a peak of θ = 45°. But if θ = 90° (i.e. the filiform chamfer 6 is zero), it is obvious that the product deterioration rate is remarkably high. On the contrary in the vicinity of θ = 10°, it becomes apparent that problems are caused in the pin clips 8, 9 of the connector pin, resulting in deterioration. The material of the connector pin affects the conditions. The same characteristics are obtained in other steel materials such as PBS-1/2H (phosphor brass - 1/2 hardness),SPCC cold rolled steel plate, etc. It can be therefore said that there is a high probability that the filiform chamfer 6 contributes to the reliability.

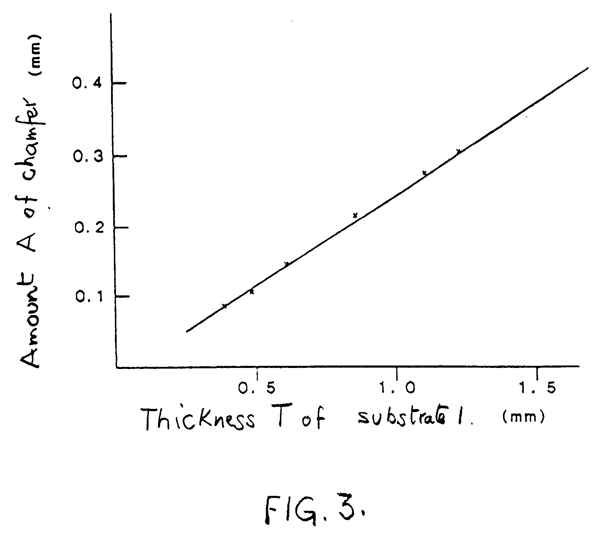

Note that the above is a case where the thickness of the glass substrate is 1.1t, but the optimum amount of chamfer 6 when the thickness of the glass substrate 1 varies will be demonstrated by Table 2, the latter indicating the optimum peak value. Figure 3 is a graph wherein the numerical values of Table 1 are graphed and are used to derive the following introduction formula:-

$$A = 0.28 \times T, \text{ where } T \text{ is the thickness of the substrate 1.}$$

Moreover, it has proved from the test results that a value introduced by the introduction formula becomes the optimum value in the relationship between the glass substrate thickness T and the amount of chamfer A. The introduction formula is defined as an approximation formula and is, though not shown in Table 2, effective for the glass substrate thickness of 0.2mm or greater.

## Table 2.

## Relationship between the glass substrate thickness (T) and the amount (A) of the chamfer.

| Glass substrate thickness T | Chamfer amount A |
|---|---|
| 1.1 mm | 0.3 mm |
| 1.0 mm | 0.28 mm |
| 0.7 mm | 0.20 mm |
| 0.55 mm | 0.15 mm |
| 0.4 mm | 0.10 mm |
| 0.3 mm | 0.08 mm |

Chamfer angle $\theta$ = 45°

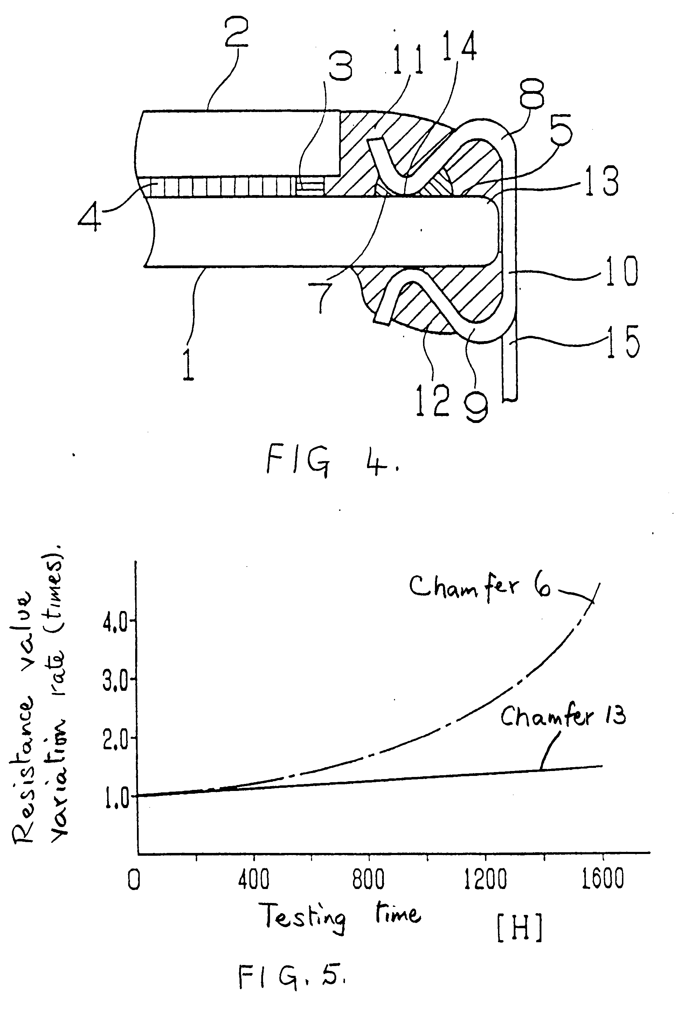

A second embodiment of the present invention will now be described with reference to Figure 4. The structure shown in Figure 4 is almost the same as that of Figure 1 except that, in the Figure 4 embodiment, a chamfer 13 of arcuate or "R-shaped" form is provided along the edge of the glass substrate 1 adjacent the electrode terminal 5 and along the opposite edge of the glass substrate 1. These chamfers are formed by the use of a cutting tool such as a diamond wheel and the like. There are advantages produced by providing the R chamfer 13 rather than the filiform chamfer 6 with respect to the impact and contact mark when a clip point 14 of the connector pin 15 impinges on the electrode terminal 5 and with respect to the surface accuracy of the clip point 14 in the relationship between the clip point 14 of the upper connect pin clip 8 and the electrode terminal 5.

Figure 5 shows how the resistance value increased in a high-temperature high-humidity (60°C - 90% RH) test with respect to display devices odf the present invention having R chamfers 13 and filiform chamfers 6 respectively. As will be seen from Figure 5, the variations in resistance values are smaller in the case of the device having the R chamfers 13. In this case, a variation of only 1/3 is apparent at 1600H. At its optimum, the amount of R chamfer is 0.3 when the glass substrate thickness is 1.1mm. It is shown from the test results that equal resistance values are obtained when R = 0.1 - 0.5. Note that the glass substrate thickness T and the optimum amount A of R chamfer show a correlation corresponding to that shown in Figure 3.

The chamfer 6.13 may be formed on the electrode terminal 5 of the liquid crystal display device, thereby greatly improving reliability with less variation in the resistance value after the connector pin has impinged on the electrode terminal.

**Claims**

1.  A liquid crystal display device comprising an insulating substrate (1); an electrode terminal (5) on a terminal-carrying surface (1a) of the substrate (1); and a connector pin (15) having an engagement portion (8) which has been introduced over an end portion (1b) of the substrate (1) and moved into a position in which it engages the electrode terminal (5) characterised in that the end portion (1b) is chamfered to reduce the risk of damage to the substrate (1) when the engagement portion (8) is so introduced.

2.  A liquid crystal display device as claimed in claim 1 characterised in that the electrode terminal (5) extends to the said end portion (1b) so as also to be chamfered.

3.  A liquid crystal display device as claimed in claim 1 or 2 characterised in that the connector pin (15) has a further portion (9) which engages a further surface (1c) of the substrate (1) which is opposite to the terminal-carrying surface (1a).

4.  A liquid crystal display device as claimed in any preceding claim characterised in that the said portion or portions (8,9) of the connector pin (15) are embedded in moulding material (11,12).

5.  A liquid crystal display device as claimed in any preceding claim characterised in that the said end portion (1b) of the substrate (1) is provided with at least one planar chamfer (6).

6.  A liquid crystal display device as claimed in claim 5 characterised in that the angle ($\theta$) betweeen the said planar chamfer (6) and the terminal-carrying surface (1a) is in the range of 20° to 60°.

7.  A liquid crystal display device as claimed in any of claims 1-4 characterised in that the said end portion (1b) of the substrate (1) is provided with at least one chamfer (13) of arcuate form.

8.  A liquid crystal display device as claimed in claim 7 characterised in that the or each chamfer (13) of arcuate form extends over substantially one third of the said end portion (1b) of the substrate (1).

9.  A liquid crystal display device as claimed in any preceding claim characterised in that the substrate is a glass substrate (1).

10. A liquid crystal display device comprising:
    an electrode terminal (5) disposed at a glass substrate (1) edge; a connect pin (15) disposed to impinge on said electrode terminal (5); and molding agents (11,12) formed therein, characterised in that a chamfer (6,13) is formed along at least one of ridge lines of said glass substrate (1) of said electrode terminal (5) on which said connect pin (15) impinges.

11. The liquid crystal display device as set forth in claim 1, wherein said chamfer (6,13) of the ridge line portion of said glass substrate (1) is a filiform chamfer (6) or an R chamfer (13).

FIG. 1.

FIG. 2.

FIG. 3.

FIG 4.

FIG. 5.